# EUROPEAN PATENT APPLICATION

(11) **EP 3 885 910 A1**
(43) Date of publication of application: **29.09.2021**
(21) Application number: 21159435.3
(22) Date of filing: 25.02.2021
(51) Int. Cl.: G06F 9/50, G06N 3/063

(54) **DYNAMIC QUALITY OF SERVICE MANAGEMENT FOR DEEP LEARNING TRAINING COMMUNICATION**

(30) Priority: 24.03.2020 US 202016828729
(71) Applicant: Facebook, Inc., Menlo Park, CA 94025 (US)
(72) Inventor: SRIDHARAN, Srinivas, Menlo Park, CA 94025 (US)
(74) Representative: Murgitroyd & Company

(57) **Abstract**

A processor analyzes a machine learning workload. Corresponding priority levels are assigned to identified data requests in the machine learning workload based on an associated data dependency delay performance impact. The assigned corresponding priority levels are indicated when providing the data requests to a memory controller. The memory controller sorts the received data requests into a plurality of different priority queues based on the indicated corresponding priority levels. The memory controller initiates the data requests from the different priority queues to memory in an order based on different qualities of service of the different priority queues.

## Description

### TECHNICAL FIELD

The present disclosure relates generally, although not exclusively, to distributed computing systems and methods of operation thereof.

### BACKGROUND

A distributed computing system is comprised of a plurality of host computer systems. The plurality of host computer systems work together by implementing corresponding machine learning models to solve a problem. Executing the corresponding machine learning models is memory intensive. Latencies develop when memory bandwidth associated with a host computer system is not properly allocated.

### SUMMARY

According to a first aspect of the present disclosure, there is provided a system, comprising: a processor configured to: analyze a machine learning workload and assign corresponding priority levels to identified data requests in the machine learning workload based on an associated data dependency delay performance impact; and indicate the assigned corresponding priority levels when providing the data requests to a memory controller; wherein the memory controller is configured to: sort the received data requests into a plurality of different priority queues based on the indicated corresponding priority levels; and initiate the data requests from the different priority queues to memory in an order based on different qualities of service of the different priority queues.

To analyze the machine learning workload, the processor may be configured to generate a data dependency graph.

The data dependency graph may be comprised of a plurality of nodes, wherein each node of the plurality of nodes corresponds to a data request.

The processor may be configured to determine the associated data dependency delay performance impact for each node of the plurality of nodes.

The assigned corresponding priority levels may include at least a high priority level, a medium priority level, and a low priority level.

The memory controller may be configured to initiate a data request in a priority queue with the high priority level when memory bandwidth associated with the memory is available.

The memory controller may be configured to initiate a data request in a priority queue with the medium priority level when memory bandwidth associated with the memory is available and after a first threshold number of data requests have been fulfilled.

The memory controller may be configured to initiate a data request in a priority queue with the low priority level when memory bandwidth associated with the memory is available and after a second threshold number of data requests have been fulfilled.

To analyze the machine learning workload, the processor may be configured to determine a current portion of the machine learning workload.

The processor may be configured to indicate the assigned corresponding priority levels based on the determined current portion of the machine learning workload.

The determined current portion may correspond to a compute heavy portion of the machine learning workload.

During the compute heavy portion, the processor may be configured to assign a data request corresponding to a compute operation to a different priority queue then a data request corresponding to a communication operation.

The determined current portion may correspond to a communication heavy portion of the machine learning workload.

During the communication heavy portion, the processor may be configured to assign a data request corresponding to a compute operation to a different priority queue then a data request corresponding to a communication operation.

According to a second aspect of the present disclosure, there is provided a method, comprising: analyzing a machine learning workload and assigning corresponding priority levels to identified data requests in the machine learning workload based on an associated data dependency delay performance impact; indicating the assigned corresponding priority levels when providing the data requests to a memory controller; sorting the received data requests into a plurality of different priority queues based on the indicated corresponding priority levels; and initiating the data requests from the different priority queues to memory in an order based on different qualities of service of the different priority queues.

Analyzing the machine learning workload may comprise generating a data dependency graph.

The data dependency graph may be comprised of a plurality of nodes, wherein each node of the plurality of nodes corresponds to a data request.

The processor may determine the associated data dependency delay performance impact for each node of the plurality of nodes.

The assigned corresponding priority levels may include at least a high priority level, a medium priority level, and a low priority level.

According to a third aspect of the present disclosure, there is provided a method, comprising: analyzing, by a processor, a machine learning workload and assigning corresponding priority levels to identified data requests in the machine learning workload based on an associated data dependency delay performance impact; and indicating the assigned corresponding priority levels when providing the data requests to a memory controller, wherein the memory controller: sorts the received data requests into a plurality of different priority queues based on the indicated corresponding priority levels; and initiates the data requests from the different priority queues to memory in an order based on different qualities of service of the different priority queues.

### BRIEF DESCRIPTION OF THE DRAWINGS

Various embodiments and examples are disclosed in the following detailed description and the accompanying drawings.
FIG. 1 is a block diagram illustrating a distributed computing system.
FIG. 2 is a diagram illustrating an example of a data dependency graph.
FIG. 3 is a diagram illustrating priority queues.
FIG. 4 is a block diagram illustrating a machine learning model.
FIG. 5 is a flow diagram illustrating a process for executing a machine learning workload.
FIG. 6 is a flow chart illustrating a process for executing a machine learning workload.
FIG. 7 is a flow chart illustrating a process for assigning a priority level to a data request.
FIG. 8 is a flow chart illustrating a process for determining data dependency delay impacts in a machine learning workload.
FIG. 9 is a flow chart illustrating a process for updating a machine learning model.
FIG. 10 is a flow chart illustrating a process for selecting a request.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments and examples is provided below along with accompanying figures. The invention may be described in connection with such embodiments and examples, but the invention is not limited to any embodiment or example. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

A distributed computing system may be comprised of a plurality of host computer systems. Each of the host computer systems may have a corresponding processor (e.g., central processing unit (CPU), graphics processing unit (GPU), an accelerator, application-specific integrated circuit (ASIC) device, etc.), a corresponding memory controller, and a corresponding memory. Each of the host computer systems may be coupled to a corresponding network interface controller (NIC). In some examples, a NIC is integrated into the host computer system (e.g., expansion card, removable device, integrated on motherboard, etc.). In some examples, a NIC is connected to a host computer system via a computer bus (e.g., PCI, PCI-e, ISA, etc.). The NIC is configured to provide network access (e.g., Ethernet, Wi-Fi, Fiber, FDDI, LAN, WAN, SAN, etc.) to the host computer system with which it is associated.

Each of the plurality of host computer systems may be configured to implement a corresponding machine learning model to output a corresponding prediction. Examples of machine learning models implemented by the distributed computing system, include, but are not limited to, a neural network model, a deep learning model, etc. A machine learning model may be comprised of a plurality of layers. Each layer may be associated with a corresponding weight. Input data may be applied to an initial layer of the machine learning model. An output of the initial layer may be provided as input to a next layer of the machine learning model. The forward pass may continue until the last layer of the machine learning model receives as input, an output from the second-to-last layer of the machine learning model is received. The last layer of the machine learning model may output a prediction.

Each host computer system of the distributed computing system may be configured to implement a different version of a machine learning model. For example, the weights associated with each layer of the machine learning models may be different. A first machine learning model may have a first weight associated with the first layer, a second machine learning model may have a second weight associated with the first layer,..., and an nth machine learning model may have an nth weight associated with the first layer. A first machine learning model may have a first weight associated with the second layer, a second machine learning model may have a second weight associated with the second layer,..., and an nth machine learning model may have an nth weight associated with the second layer. A first machine learning model may have a first weight associated with the nth layer, a second machine learning model may have a second weight associated with the nth layer,..., and an nth machine learning model may have an nth weight associated with the nth layer.

The distributed computing system may apply data associated with an embedding table to each of the corresponding machine learning models of the host computer systems. Storing the data associated with an embedding table in a single host computer system may overburden the resources of the single host computer system. For example, storing the data associated with an embedding table may use a large portion of available memory of the single host computer system. This may reduce system performance of the single host computer system since the large portion of the memory that could be used for other purposes is reserved for storing the embedding table. To reduce the burden on the single host computer system, the data associated with an embedding table is distributed across the plurality of host computer systems such that each of the host computer systems stores a corresponding portion of the distributed table.

A first host computer system may request data from each of the other host computer systems of the distributed computing system and receive the requested data to perform a forward pass. For example, the first host computer system may request some or all of the distributed table portion stored by a second host computer system of the distributed computing system. The request may be received at a NIC of the second host computer system. The request may be provided from the NIC of the second host computer system to the processor of the second host computer system. In response to the request, the processor of the second host computer system may perform a lookup and retrieve the requested data from the memory of the second host computer system and provide the requested data to the first host computer system via the NIC of the second host computer system. A memory controller of the second host computer may reserve memory bandwidth to perform the lookup. There may be a delay from the time the processor of the second host system receives the data request and the time the processor of the second host system is able to perform the memory lookup because the memory controller may be unable to reserve memory bandwidth to perform the memory lookup.

After the requested data has been received from each of the other host computer systems, the first host computer system may combine the received data with the data associated with its distributed table portion to generate an input dataset for the machine learning model of the first host computer system. There may be a delay from the time the processor of the second host system receives the requested data and the time the processor of the second host system is able to combine the received data with the data associated with its distributed table portion because the memory controller may be unable to reserve memory bandwidth to perform the combination to generate the input dataset. The input dataset may be applied to the machine learning model associated with the first host computer system. The machine learning model associated with the first host computer system may output a prediction. The first host computer system may receive feedback based on its prediction. For example, the first host computer system may predict a user associated with a social media platform is interested in a particular product and the first host computer system may receive feedback (direct or indirect) from the user indicating whether the user is interested in the particular product.

The first host computer system may use the feedback to update its corresponding machine learning model. For example, the first host computer system may use the feedback to update weights associated with each of the plurality of layers of the machine learning model. The first host computer system may also use the feedback to update its corresponding distributed table portion. For example, an entry of the distributed table may represent the user's interests. The element values of the entry may be adjusted based on the feedback to provide a more accurate representation of the user interests.

While the first host computer system is performing a forward pass to output a prediction, the other host computer systems of the distributed system may also be performing corresponding forward passes in parallel to output corresponding predictions. The other host computer systems may also receive corresponding feedback based on their corresponding predictions and use the corresponding feedback to update their corresponding models and corresponding distributed table portions.

Updating the corresponding machine learning models of the host computer systems may comprise the host computer systems performing weight gradient communications and sharing corresponding weights associated with each of the machine learning model layers to determine a collective weight for each of the machine learning model layers. For example, the first host computer system may provide to the other host computer systems an updated weight associated with a last layer of machine learning model. The other host computer systems may provide to the first host computer system corresponding updated weights associated with the last layer of the machine learning model. The host computer systems, i.e., the first host computer system and the other host computer systems, may determine a collective weight for the last layer of the machine learning model. The host computer systems may perform this process each time a layer of the machine learning model is updated. The host computer systems may collectively determine updated values for the distributed table. For example, the distributed table may be an embedding table that represents an entity. Elements of the embedding may be updated to more accurately represent the entity. The updated values may be provided to a processor associated with a host computer system via a NIC associated with the host computer system. In response to receiving the updated values, the processor associated with the host computer system may look up the distributed table portion stored in memory, retrieve the distributed table portion from memory, and update the retrieved distributed table portion with the updated values.

One limiting factor in the above process is that each processor has a finite number of cores. Some of the cores may be used for compute operations and some of the cores may be used for communication operations. During a machine learning workload, i.e., performing a forward pass and back propagation associated with a machine learning model, the compute cores (cores used for compute operations) and communication cores (cores used for communication operations) may be competing for memory bandwidth.

Other systems may provision a first fixed amount of memory bandwidth for compute operations and a second fixed amount of memory bandwidth for communication operations. However, merely provisioning a fixed amount of memory bandwidth for compute operations and provisioning a fixed amount of memory bandwidth for communication operations may cause performance issues for the machine learning workload. In some portions of the machine learning workload, the amount of memory bandwidth may be over-provisioned or under-provisioned. For example, the fixed amount of memory bandwidth provisioned for compute operations may be less than the amount of memory bandwidth needed to process one or more compute operations, which causes latency in the machine learning workload. The fixed amount of memory bandwidth provisioned for compute operations may be more than the amount of memory bandwidth needed to process one or more compute operations, which may cause latency in the machine learning workload if the amount of memory bandwidth provisioned for communication operations is less than the amount of memory bandwidth needed to process one or more communications operations. The fixed amount of memory bandwidth provisioned for communication operations may be less than the amount of memory bandwidth needed to process one or more communication operations, which causes latency in the machine learning workload. The fixed amount of memory bandwidth provisioned for communication operations may be more than the amount of memory bandwidth needed to process one or more communication operations, which may cause latency in the machine learning workload if the amount of memory bandwidth provisioned for compute operations is less than the amount of memory bandwidth needed to process one or more compute operations.

Latencies in performing a machine learning workload may be reduced by assigning a priority level to a data request (e.g., a communication operation, a compute operation) and assigning the data request to a priority queue that corresponds to the assigned priority level. The memory of a host computer system may be associated with a plurality of priority queues with corresponding priority levels. Each priority queue has a corresponding quality of service (QoS) that determines a frequency at which a data request is fulfilled. For example, a data request that is in a priority queue with a high priority level may be immediately fulfilled when memory bandwidth is available. A data request that is in a priority queue with a medium priority level may be fulfilled after a first threshold number of other data requests have been fulfilled. A data request that is in a priority queue with a low priority level may be fulfilled after a second threshold number of other data requests have been fulfilled.

The machine learning workload may be analyzed to determine whether the machine learning workload is comprised of one or more compute heavy portions and/or one or more communication heavy portions. A machine learning workload portion is a compute heavy portion in the event there are more compute operations being performed than communication operations during the machine learning workload portion. A machine learning workload portion is a communication heavy portion in the event there are more communication operations being performed than compute operations during the machine learning workload portion.

A compute operation or communication operation may be assigned to a priority queue based on whether the machine learning workload is in a compute heavy portion of the machine learning workload or a communication heavy portion of the machine learning workload. For example, when the machine learning workload is in a compute heavy portion, a compute request may be assigned to a priority queue with a high priority level while a communication request may be assigned to a priority queue with a medium or low priority level. When the machine learning workload is in a communication heavy portion, a communication request may be assigned to a priority queue with a high priority level while a compute request may be assigned to a priority queue with a medium or low priority level.

Data requests within the machine learning workload may be identified as being dependent other data requests of the machine learning workload. A data dependency graph may be generated to determine the dependencies between data requests and data dependency delay impact. A data requests, such as a compute operation, may be dependent on a plurality of communication and/or compute operations. During a compute heavy portion of a workload, a memory controller may receive the compute operation, but determine that some of the data associated with the plurality of dependent communication and/or compute operations have not been determined or received. Instead of placing the data request corresponding to a compute operation in a priority queue with a high level priority, the data request corresponding to a compute operation may be placed, based on an expected delay (e.g., the amount of time needed to determine or receive the data associated with the plurality of dependent communication and/or compute operations), in either a priority queue with a medium level priority or a priority queue with a low level priority. The data request corresponding to a compute operation may be placed in a priority queue with a medium level priority in the event the data associated with the plurality of dependent communication and/or compute operations is expected to be determined or received by the time the compute operation is in the front of the priority queue with the medium level priority. The data request corresponding to a compute operation may be placed in a priority queue with a low level priority in the event the data associated with the plurality of dependent communication and/or compute operations is expected to be determined or received by the time the compute operation is in the front of the priority queue with the low level priority.

When the machine learning workload is executing, a processor of a host computer system may assign a data request to a priority queue with a corresponding priority level. A memory controller of the host computer system may analyze the plurality of priority queues and select which data request to fulfill based on the corresponding QoS associated with the plurality of priority queues. This reduces competition for memory bandwidth and latencies in executing a machine learning workload because memory bandwidth will be available for compute operations and/or communication operations when they are needed.

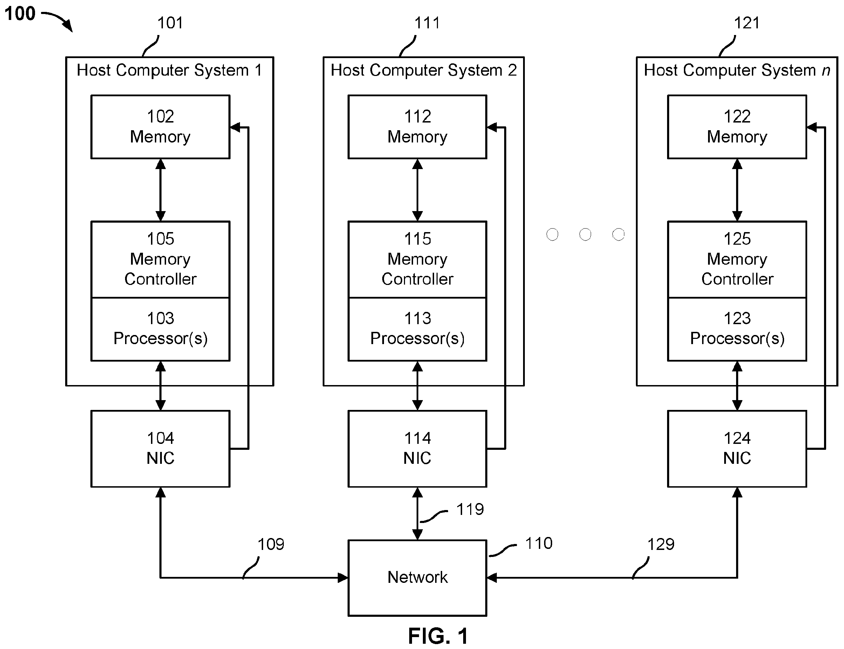

FIG. 1 is a block diagram illustrating a distributed computing system. In the example shown, distributed computing system 100 is comprised of host computer system 101, host computer system 111, and host computer system 121. Although three host computer systems are depicted, distributed computing system 100 may be comprised of *n* host computer systems. Host computer systems 101, 111, 121 are connected to each other via network 110. Network 110 may be a LAN, WAN, intranet, the Internet, and/or a combination thereof Connections 109, 119, 129 may be a wired or wireless connection.

Host computer system 101 is comprised of memory 102, memory controller 105, and processor(s) 103. Host computer system 101 is coupled to NIC 104. Host computer system 111 is comprised of memory 112, memory controller 115, and processor(s) 113. Host computer 111 is coupled to NIC 114. Host computer system 121 is comprised of memory 122, memory controller 125, and processor(s) 123. Host computer 121 is coupled to NIC 124. In some examples, NICs 104, 114, 124 are integrated into host computer system 101, 111, 121 (e.g., expansion card, removable device, integrated on motherboard, etc.), respectively. In some examples, NICs 104, 114, 124 are connected to host computer system 101, 111, 121, respectively, via a computer bus (e.g., PCI, PCI-e, ISA, etc.). NICs 104, 114, 124 are configured to provide network access (e.g., Ethernet, Wi-Fi, Fiber, FDDI, LAN, WAN, SAN, etc.) to the host computer system with which it is associated.

A table, such as an embedding table, is comprised of a plurality of entries. Each entry may be associated with a plurality of elements. For example, a table may be comprised of millions of entries, where each of the entries is comprised of 64 elements. Instead of storing the table in the memory of a single host computer system, the table may be distributed across the distributed computing system 100. For example, memory 102 may store a first distributed table portion, memory 112 may store a second distributed table portion, ..., and memory 122 may store an nth distributed table portion. This reduces the dependency of distributed computing system 100 on a single compute node and its corresponding memory for performing predictions. The memories 102, 112, 122 may store a plurality of distributed table portions associated with different distributed tables. For example, memory 102 may store a first distributed table portion associated with users and a first distributed table portion associated with items (e.g., movies, products, services, goods, etc.). Memory 112 may store a second distributed table portion associated with users and a second distributed table portion associated with items. Memory 122 may store an nth distributed table portion associated with users and an nth distributed table portion associated with items.

Processor(s) 103, 113, 123 may be a CPU, a GPU, an accelerator, application-specific integrated circuit (ASIC) device, any other type of processing unit, or a combination thereof. Processors 103, 113, 123 may be configured to execute a corresponding machine learning workload (e.g., implementing a machine learning model). Examples of machine learning models implemented by distributed computing system 100, include, but are not limited to, a neural network model, a deep learning model, etc. A machine learning model may be comprised of a plurality of layers. Each layer may be associated with a corresponding weight.

The machine learning models implemented by each of the processors 103, 113, 123 may be different. For example, the weights associated with each layer of a machine learning model may be different based on the processor on which the machine learning model is executed. The machine learning model executed by processor 103 may have a first weight associated with the first layer, the machine learning model executed by processor 113 may have a second weight associated with the first layer,..., and the machine learning model executed by processor 123 may have an nth weight associated with the first layer. The machine learning model executed by processor 103 may have a first weight associated with the second layer, the machine learning model executed by processor 113 may have a second weight associated with the second layer,..., and the machine learning model executed by processor 123 may have an nth weight associated with the second layer. The machine learning model executed by processor 103 may have a first weight associated with the nth layer, the machine learning model executed by processor 113 may have a second weight associated with the nth layer,..., and the machine learning model executed by processor 123 may have an nth weight associated with the nth layer.

Host computer systems 101, 111, 121 may work together to solve a problem. For example, host computer systems 101, 111, 121 may determine whether a particular user is interested in a particular item. Host computer systems 101, 111, 121 may implement corresponding machine learning models to predict whether the particular user is interested in the particular item.

Host computer systems 101, 111, 121 may share their corresponding distributed table portions to perform a prediction. For example, host computer system 101 may share with host computer systems 111, 121 via NIC 104 the distributed table portion stored in memory 102. Similarly, host computer system 111 may share with host computer systems 101, 121 via NIC 114 the distributed table portion stored in memory 112 and host computer system 121 may share with host computer systems 101, 111 via NIC 124 the distributed table portion stored in memory 122.

Processors 103, 113, 123 may apply the data associated with the distributed table portions to a machine learning model and perform a forward pass to output corresponding predictions. Feedback may be received (direct or indirect) and the feedback may be used to update the corresponding machine learning models associated with processors 103, 113, 123. A back propagation may be performed to update the corresponding machine learning models associated with processors 103, 113, 123. Updating the corresponding machine learning models of the host computer systems may comprise host computer systems 101, 111, 121 performing weight gradient communications and sharing corresponding weights associated with each of the machine learning model layers to determine a collective weight for each of the machine learning model layers. For example, host computer system 101 may provide to the host computer systems 111, 121 an updated weight associated with a last layer of the machine learning model. Host computer systems 111, 121 may provide to the host computer system 101 corresponding updated weights associated with the last layer of the machine learning model. Host computer systems 101, 111, 121 may determine a collective weight for the last layer of the machine learning model. Such a process is called Allreduce and requires both compute operations and communication operations to be performed. The host computer systems may perform this process each time a layer of the machine learning model is updated.

During a machine learning workload, i.e., performing a forward pass and back propagation associated with a machine learning model, the compute cores (cores used for compute operations) and communication cores (cores used for communication operations) may be competing for memory bandwidth. Latencies in performing a machine learning workload may be reduced by assigning a priority level to a request (e.g., a communication operation, a compute operation) and assigning the request to a priority queue that corresponds to the assigned priority level. The memory of a host computer system may be associated with a plurality of priority levels. Each priority queue has a corresponding QoS that determines a frequency at which a request is fulfilled. For example, a request that is in a priority queue with a high priority level may be immediately fulfilled when memory bandwidth is available. A request that is in a priority queue with a medium priority level may be fulfilled after a first threshold number of other requests have been fulfilled. A request that is in a priority queue with a low priority level may be fulfilled after a second threshold number of other requests have been fulfilled.

A processor, such as one of the processors 103, 113, 123, may analyze a machine learning workload to determine whether the machine learning workload is comprised of one or more compute heavy portions and/or one or more communication heavy portions. For example, the forward pass portion of a machine learning workload may be determined to be a compute heavy portion of the machine learning workload. The back propagation portion of the machine learning workload may be determined to be a communication heavy portion of the machine learning workload.

A processor, such as one of the processors 103, 113, 123 may assign a compute operation or a communication operation to a priority queue based on whether the machine learning workload is in a compute heavy portion of the machine learning workload or a communication heavy portion of the machine learning workload. For example, when the machine learning workload is in a compute heavy portion, a processor may assign a data request corresponding to a compute operation to a priority queue with a high priority level while the processor may assign a data request corresponding to a communication operation to a priority queue with a medium or low priority level. When the machine learning workload is in a communication heavy portion, a processor may assign a data request corresponding to a communication operation to a priority queue with a high priority level while the processor may assign a data request corresponding to a compute operation to a priority queue with a medium or low priority level.

A processor, such as one of the processors 103, 113, 123, may identify operations of the machine learning workload as being dependent on other operations of the machine learning workload. The processor may generate a data dependency graph to determine the dependencies between data requests and data dependency delay. For example, a compute operation may be dependent on a plurality of communication and/or compute operations. During a compute heavy portion of a workload, a memory controller, such as memory controllers 105, 115, 125, may receive a data request corresponding to a compute operation, but determine that some of the data associated with the plurality of dependent communication and/or compute operations have not been determined or received. Instead of placing the data request corresponding to a compute operation in a priority queue with a high level priority, a processor may place the data request corresponding to a compute operation, based on an expected delay (e.g., the amount of time needed to determine or receive the data associated with the plurality of dependent communication and/or compute operations), in either a priority queue with a medium level priority or a priority queue with a low level priority. A processor may place the data request corresponding to a compute operation may be placed in a priority queue with a medium level priority in the event the data associated with the plurality of dependent communication and/or compute operations is expected to be determined or received by the time the data request corresponding to the compute operation is in the front of the priority queue with the medium level priority. A processor may place the data request corresponding to a compute operation in a priority queue with a low level priority in the event the data associated with the plurality of dependent communication and/or compute operations is expected to be determined or received by the time the compute operation is in the front of the priority queue with the low level priority.

When the machine learning workload is executing, a processor, such as one of the processors 103, 113, 123, may assign a data request to a priority queue with a corresponding priority level. A memory controller, such as one of the memory controllers 105, 115, 125, may analyze the plurality of priority queues and select which data request to fulfill based on the corresponding QoS associated with the plurality of priority queues. This reduces competition for memory bandwidth and latencies in executing a machine learning workload because memory bandwidth will be available for compute operations and/or communication operations when they are needed.

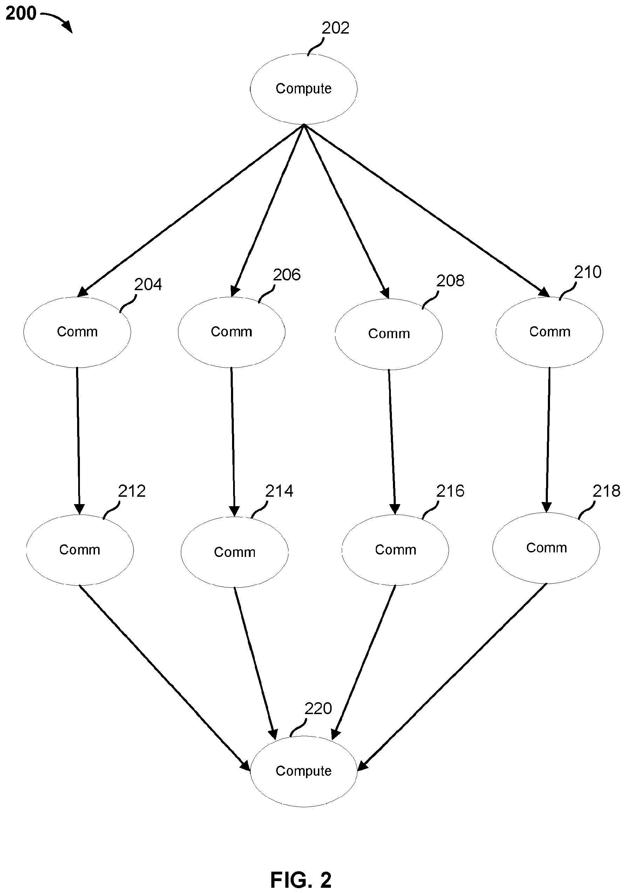

FIG. 2 is a diagram illustrating an example of a data dependency graph. In the example shown, data dependency graph 200 is comprised of nodes 202, 204, 206, 208, 210, 212, 214, 216. Data dependency graph 200 may be generated by a processor, such as processors 103, 113, 123. A data dependency graph may be generated after a processor analyzes a machine learning workload. The data dependency graph may be used to determine data dependency delay performance impact for each of the nodes.

Node 202 corresponds to a compute operation. For example, a first host computer system may determine an updated weight associated with a layer of a machine learning model. The compute operation may need data that is stored in a memory of the first host computer system. A processor of the first host computer system may assign the compute operation to a priority queue with a high level priority. In response to the compute operation being assigned to the priority queue with a high level priority, a memory controller may select the compute operation and provide the necessary memory bandwidth needed to complete the compute operation.

The first host computer system may communicate an output of the compute operation, such as a determined weight, with a plurality of other host computer systems. For example, node 204 may correspond to the first host computer system performing a communication operation by sending the determined weight to a second host computer system, node 206 may correspond to the first host computer system performing a communication operation by sending the determined weight to a third host computer system, node 208 may correspond to the first host computer system performing a communication operation by sending the determined weight to a fourth host computer system, and node 210 may correspond to the first host computer system performing a communication operation by sending the determined weight to a fifth host computer system.

A processor of the first host computer system may assign the communication operations to a priority queue with a high level priority. In response to the communication operations being assigned to the priority queue with a high level priority, a memory controller may select the communication operations and provide the necessary memory bandwidth needed to complete the communication operations. In some examples, the memory controller sequentially performs the communication operations associated with nodes 204, 206, 208, 210 based on an available amount of memory bandwidth. In some examples, the memory controller performs the communication operations associated with nodes 204, 206, 208, 210 in parallel based on an available amount of memory bandwidth. In some examples, the memory controller sequentially performs some of the communication operations associated with nodes 204, 206, 208, 210 and performs some of the communication operations associated with nodes 204, 206, 208, 210 in parallel based on an available amount of memory bandwidth.

Before nodes 204, 206, 208, 210 are able to be performed, the first host computer system must complete the compute operation associated with node 202. Thus, nodes 204, 206, 208, 210 are dependent on node 202.

The first host computer system may receive from a plurality of other host computer systems updated weights associated with corresponding layers of machine learning models associated with the plurality of other host computer systems. For example, node 212 may correspond to the first host computer system performing a communication operation by receiving an updated weight from a second host computer system, node 214 may correspond to the first host computer system performing a communication operation by receiving an updated weight from a third host computer system, node 216 may correspond to the first host computer system performing a communication operation by receiving an updated weight from a fourth host computer system, and node 218 may correspond to the first host computer system performing a communication operation by receiving an updated weight from a fifth host computer system. Thus, nodes 212, 214, 216, 218 are dependent on nodes 204, 206, 208, 210, respectively.

The first host computer system may receive the corresponding updated weights from the different host computer systems at different times. Node 220 is dependent on outputs from nodes 212, 214, 216, 218. The compute operation associated with node 220 may be determining a collective weight for a layer of a machine learning model. A processor may assign the communication operation associated with nodes 212, 214, 216, 218 to a priority queue with a medium or low priority level because the data associated with nodes 212, 214, 216, 218 may not be received at the same time. Some of the data associated with nodes 212, 214, 216, 218 may not be received when the compute operation associated with node 220 is placed in the priority queue with a medium or low priority level, but by the time the compute operation associated with node 220 is at the front of a priority queue with a medium or low priority level, the first host computer system may have received all of the data associated with nodes 212, 214, 216, 218.

Assigning the compute operation associated with node 220 to a priority queue with a medium or low priority level may improve performance of the first host computer system, and the overall distributed computing system, because instead of immediately trying to perform the compute operation associated with node 220, reserving memory bandwidth for the compute operation associated with node 220, and waiting for the data associated with nodes 212, 214, 216, 218 to be received, the memory bandwidth reserved for the compute operation associated with node 220 may be allocated to other operations that can be immediately performed. This is a more efficient use of the memory bandwidth because the memory bandwidth is used upon being reserved instead of reserving the memory bandwidth and waiting for the reserved memory bandwidth to be used.

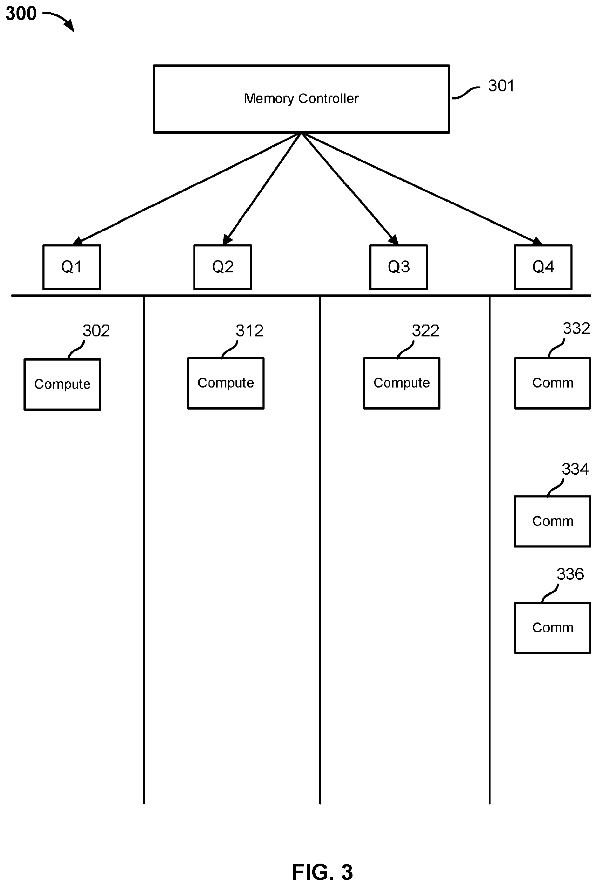

FIG. 3 is a diagram illustrating priority queues. In the example shown, priority queues 300 may be implemented by a host computer system, such as host computer systems 101, 111, 121. Although FIG. 3 depicts four different priority queues, a host computer system may implement n priority queues where each of the priority queues has a different priority level.

Memory controller 301 may select a data request (e.g., compute operations or communication operations) to perform based on a plurality of priority queues and reserve memory bandwidth for the selected data requests. Each of the priority queues has a corresponding QoS. For example, priority queue Q1 may have a QoS that indicates that memory controller 301 is to immediately reserve memory bandwidth to perform a data request and to immediately perform the data request when the reserved memory bandwidth is available. Priority queue Q2 may have a QoS that indicates that memory controller 301 is to reserve memory bandwidth to perform a data request and to perform the data request after a first threshold number of operations (e.g., 4) have been performed. Priority queue Q3 may have a QoS that indicates that memory controller 301 is to reserve memory bandwidth to perform a data request and to perform the data request after a second threshold number of operations (e.g., 8) have been performed. Priority queue Q4 may have a QoS that indicates that memory controller 301 is to reserve memory bandwidth to perform a data request and to perform the data request after a third threshold number of operations (e.g., 16) have been performed.

The plurality of priority queues may have a counter. The counter may be incremented each time memory controller 301 reserves memory bandwidth for a data request. In some examples, each priority queue has a corresponding counter. In some examples, a single counter is used for all of the priority queues. Memory controller 301 may use the counter to determine when to reserve memory bandwidth for a data request in one of the priority queues.

Memory controller 301 may assign an operation to a priority queue based on whether a machine learning workload is in a compute heavy portion. For example, a data request corresponding to a compute operation, such as compute operation 302, requesting memory bandwidth during a compute heavy portion of a machine learning workload may be assigned to a priority queue with a high priority level. The compute operation may be dependent upon one or more other operations before the compute operation may be performed. Such a compute operation (e.g., compute operations 312, 322) may be assigned to a priority queue with a medium priority level (e.g., Q2, Q3). The data request corresponding to a compute operation may be at the front of the priority queue with the medium priority level when the one or more other dependent operations are completed. This is an efficient use of the memory bandwidth because memory bandwidth will be reserved for a data request when the data request is ready to be executed and not waiting for an output of a dependent operation. A data request corresponding to a communication operation, such as communication operations, 332, 334, 336, requesting memory bandwidth during a compute heavy portion of a machine learning workload may be assigned to a priority queue with a low priority level.

Memory controller 301 may assign data request corresponding to an operation to a priority queue based on whether a machine learning workload is in a communication heavy portion. For example, data request corresponding to a communication operation requesting memory bandwidth during a communication heavy portion of a machine learning workload may be assigned to a priority queue with a high priority level. The communication operation may be dependent upon one or more other operations before the communication operation may be performed. Such a communication operation may be assigned to a priority queue with a medium priority level (e.g., Q2, Q3). The data request corresponding to a communication operation may be at the front of the priority queue with the medium priority level when the one or more other dependent operations are completed. This is an efficient use of the memory bandwidth because memory bandwidth will be reserved for an operation when the operation is ready to be executed and not waiting for an output of a dependent operation. A data request corresponding to a compute operation requesting memory bandwidth during a communication heavy portion of a machine learning workload may be assigned to a priority queue with a low priority level.

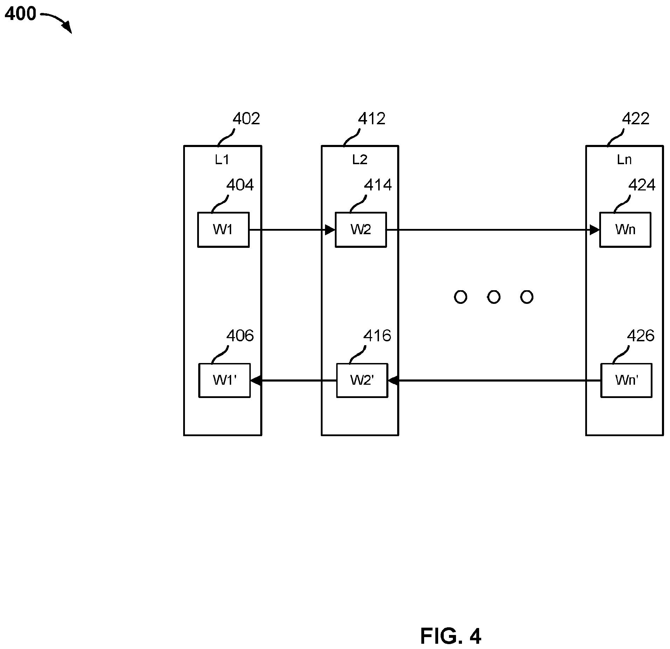

FIG. 4 is a block diagram illustrating a machine learning model. In the example shown, machine learning model 400 may be implemented by a host computer system, such as host computer systems 101, 111, 121.

In the example shown, machine learning model 400 is comprised of layers 402, 412, 422. Although the example illustrates machine learning model 400 as having three layers, machine learning model 400 may be comprised of n layers.

Each of the layers is associated with a corresponding weight. Layer 402 is associated with weight 404, layer 412 is associated with weight 414, and layer 422 is associated with weight 424. In the forward pass, input data may be applied to layer 402. Input data may correspond to data associated with a distributed table (e.g., one or more entries of the distributed table). Layer 402 may apply weight 404 (e.g., a weighted function) to the input data and output a value. The output of layer 402 may be provided as input to layer 412. Layer 412 may apply weight 414 to the data outputted by layer 402 and output a value. The output of layer 412 may be provided as input to layer 422. Layer 422 may apply weight 424 to the data outputted by layer 412 and output a value. The value outputted by layer 422 may correspond to a prediction. The forward pass of machine learning model 400 is comprised of a plurality of compute operations. A memory controller of a host computer system may give priority for memory bandwidth to such compute operations during the forward pass over communication operations.

A host computer system may receive feedback based on its prediction and determine that its corresponding machine learning models need to be updated to provide more accurate predictions in the future. During a back propagation portion, an updated weight for layer 422 may be determined. In some examples, the updated weight is shared with one or more other host computer systems. The one or more other host computer systems may share their corresponding updated weights for layer 422. A collective weight 426 may be determined for layer 422. An updated weight for layer 412 may be determined. In some examples, the updated weight is shared with one or more other host computer systems. The one or more other host computer systems may share their corresponding updated weights for layer 412. A collective weight 416 may be determined for layer 412. An updated weight for layer 402 may be determined. In some examples, the updated weight is shared with one or more other host computer systems. The one or more other host computer systems may share their corresponding updated weights for layer 402. A collective weight 416 may be determined for layer 412. A memory controller of a host computer system may give priority for memory bandwidth to communication operations during back propagation over compute operations.

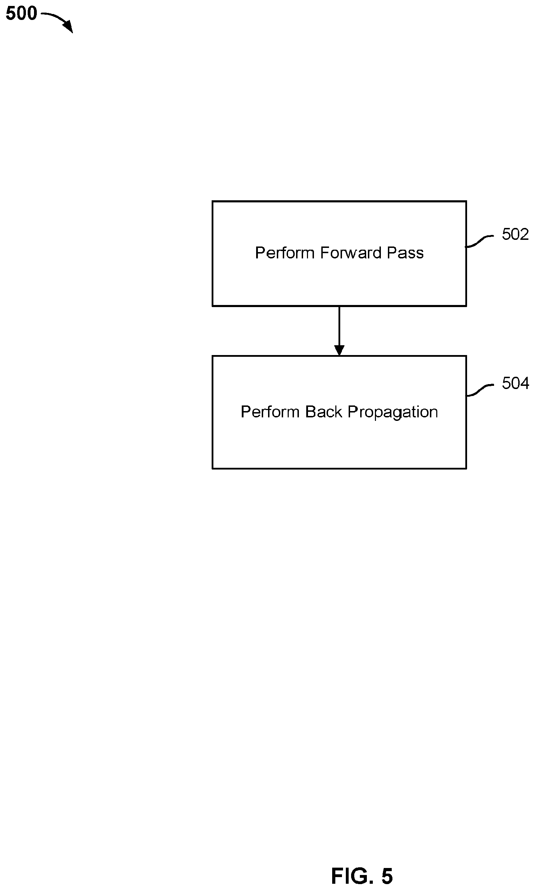

FIG. 5 is a flow diagram illustrating a process for executing a machine learning workload. In the example shown, process 500 may be implemented by a host computer system, such as host computer systems 101, 111, 121.

At 502, a forward pass is performed. Input data may be applied to a machine learning model of a host computer system and a prediction is outputted by the host computer system. In some examples, the input data is data associated with a distributed table, such as an embedding table.

At 504, a back propagation is performed. The machine learning model may be updated. The machine learning model may be comprised of a plurality of layers where each layer is associated with a corresponding weight. The corresponding weights associated with each layer of the machine learning model may be updated. In some examples, the corresponding weights associated each layer of the machine learning model is shared with one or more other host computer systems and a collective weight is determined for each layer of the machine learning model.

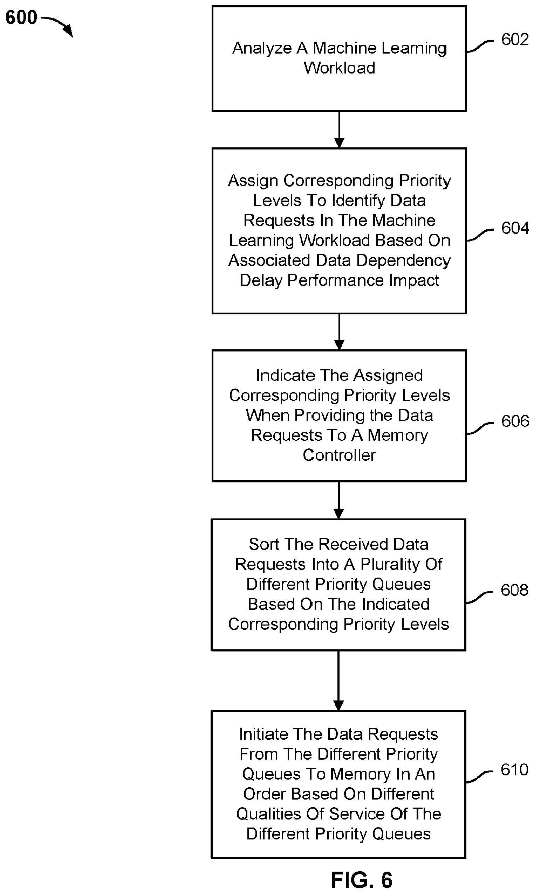

FIG. 6 is a flow chart illustrating a process for executing a machine learning workload. In the example shown, process 600 may be implemented by a host computer system, such as host computer systems 101, 111, 121.

At 602, a machine learning workload is analyzed. A machine learning workload is comprised of a plurality of portions. A machine learning workload is comprised of a plurality of operations. In some examples, a machine learning workload portion is a compute heavy portion. A machine learning workload portion is a compute heavy portion in the event there are more compute operations being performed than compute operations during the machine learning workload portion. In some examples, a machine learning workload is a communication heavy portion. A machine learning workload portion is a communication heavy portion in the event there are more communication operations being performed than compute operations during the machine learning workload portion. The machine learning workload is analyzed to determine whether a machine learning workload portion is a compute heavy portion, a communication heavy portion, or a neutral portion (neither compute heavy nor communication heavy).

The machine learning workload is analyzed to determine data dependency delay impact between operations of the machine learning workload. For example, a compute operation may receive data from a plurality of communication operations. The machine learning workload may be analyzed to determine how much time (i.e., data dependency delay) there is between receiving a first piece of data needed for the compute operation and receiving the last piece of data needed for the compute operation.

At 604, corresponding priority levels are assigned to identify data requests in the machine learning workload based on associated data dependency delay performance impact. Data requests corresponding to operations of the machine learning workload are assigned different priority levels (e.g., low, medium, high) based on a corresponding data dependency delay performance impact. Data requests corresponding to operations with no data dependency delay performance impact may be assigned a high priority level. Data requests corresponding to operations with a data dependency delay performance impact less than or equal to a first threshold may be assigned a medium priority level. Data requests corresponding to operations with a data dependency delay performance impact greater than the first threshold and less than a second threshold may be assigned a low priority level.

At 606, the assigned corresponding priority levels are indicated when provided the data requests to a memory controller. A processor may attempt to execute an operation and request memory bandwidth to perform the operation. The processor may assign the data request corresponding to an operation with a priority that was previously determined by analyzing the machine learning workload.

At 608, the received data requests are sorted into a plurality of priority queues based on the indicated corresponding priority levels. For example, a data requests corresponding to an operation may be assigned to a priority queue with a high priority level, a priority queue with a medium priority level, or a priority queue with a low priority level.

At 610, the data requests are initiated from the different priority queues to memory in an order based on different qualities of service of the different priority queues. A memory controller may select a data request corresponding to operation from a priority queue and reserve memory bandwidth for the operation. The memory controller may use a counter to determine when to select a data request corresponding to an operation from a priority queue. For example, a data request in a priority queue with a high priority level may be selected as the next data request. A data request in a priority queue with a medium priority level may be selected after a first threshold number of data requests have been selected and performed. A data request in a priority queue with a low priority level may be selected after a second threshold number of data requests have been selected and performed.

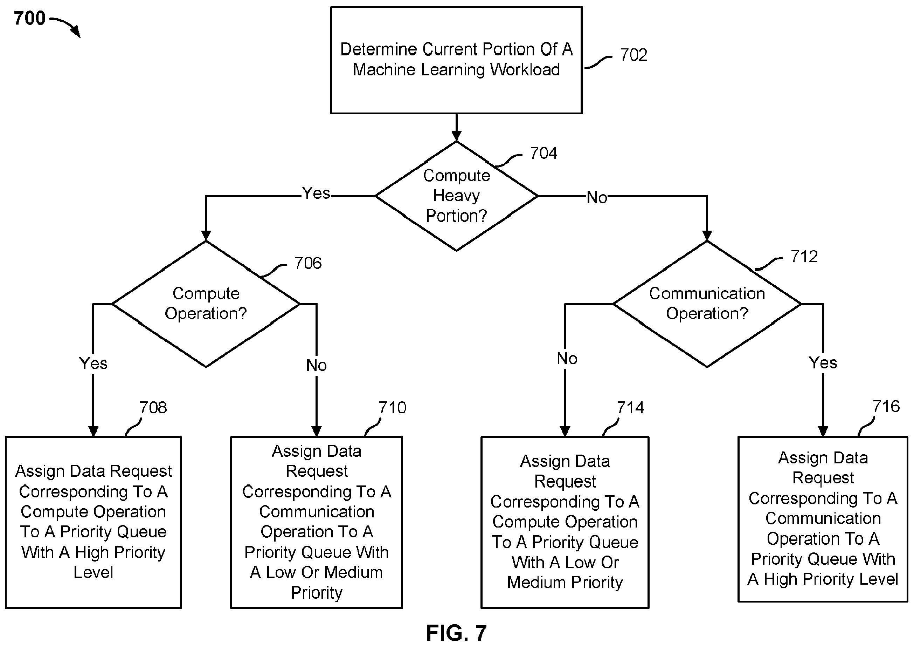

FIG. 7 is a flow chart illustrating a process for assigning a priority level to a data request. Process 700 may be implemented by a host computer system, such as host computer systems 101, 111, 121. Process 700 may be implemented to perform some or all of step 602 or step 604 of process 600.

At 702, a current portion of a machine learning workload is determined. A machine learning workload is comprised of a plurality of portions. A machine learning workload is comprised of a plurality of operations. A machine learning workload portion is a compute heavy portion in the event there are more compute operations being performed than communication operations during the machine learning workload portion. A machine learning workload portion is a communication heavy portion in the event there are more communication operations being performed than compute operations during the machine learning workload portion.

At 704, it is determined whether the current portion is a compute heavy portion. In the event the determined portion is a compute heavy portion, process 700 proceeds to 706. In the event the determined is not a compute heavy portion, i.e., a communication heavy portion, process 700 proceeds to 712.

At 706, it is determined whether a data request corresponds to a compute operation. In the event data request corresponds to a compute operation, process 700 proceeds to 708. In the event the data request does not corresponds to a compute operation, i.e., the data request corresponds to a communication operation, process 700 proceeds to 710.

At 708, the data request corresponding to a compute operation is assigned to a priority queue with a high priority level. A data request corresponding to an operation in a priority queue with a high priority level may be selected as the next operation for which a memory controller reserves memory bandwidth.

At 710, the data request corresponding to a communication operation is assigned to a priority queue with a low or medium priority level. A data request in a priority queue with a medium priority level may be selected after a first threshold number of operations have been selected and performed. A data request in a priority queue with a low priority level may be selected after a second threshold number of operations have been selected and performed.

At 712, it is determined whether a data request corresponds to a communication operation. In the event the data request corresponds to a communication operation, process 700 proceeds to 716. In the event the data request does not correspond to a communication operation, i.e., the data request corresponds to a compute operation, process 700 proceeds to 714.

At 714, the data request corresponding to a compute operation is assigned to a priority queue with a low or medium priority level. At 716, the data request corresponding to a communication operation is assigned to a priority queue with a high priority level.

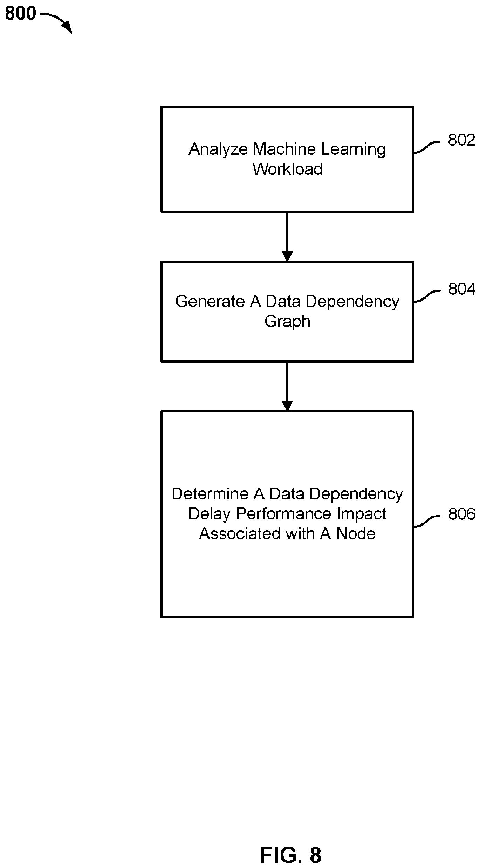

FIG. 8 is a flow chart illustrating a process for determining data dependency delay impacts in a machine learning workload. In the example shown, process 900 may be implemented by a host computer system, such as host computer systems 101, 111, 121. Process 900 may be implemented to perform some of step 602 or step 604 of process 600.

At 802, a machine learning workload is analyzed. The machine learning workload is comprised of a plurality of nodes. A node may correspond to a compute operation or a communication operation.

At 804, a data dependency graph is generated. The data dependency graph indicates how the plurality of nodes of the machine learning workload are connected.

At 806, a data dependency delay performance impact associated with a node is determined. A node may be dependent upon one or more other nodes of the data dependency graph. The data dependency delay performance impact associated with a node may include the amount of time between when the node receives data from a first dependent node and a last dependent node (e.g., upstream delay). The data dependency delay performance associated with a node may include the amount for the time needed for the node to perform an operation and provide an output to another node of the data dependency graph (e.g., downstream delay).

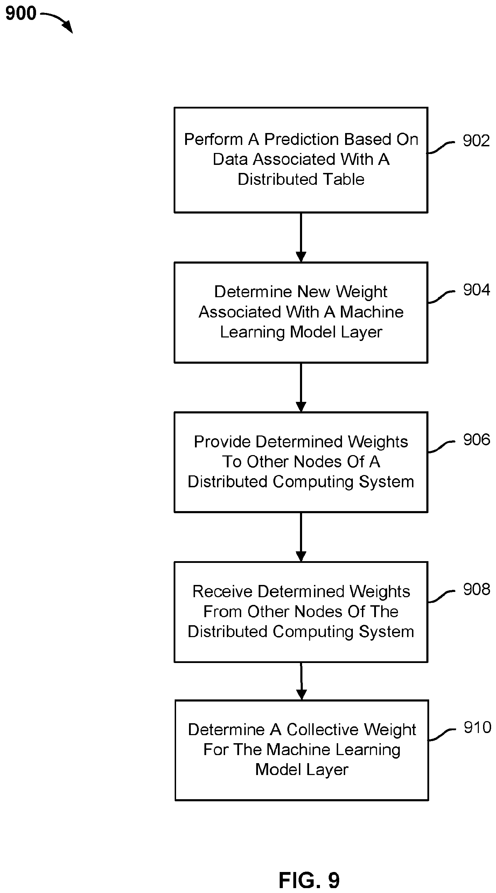

FIG. 9 is a flow chart illustrating a process for updating a machine learning model. In the example shown, process 900 may be implemented by a host computer system, such as host computer systems 101, 111, 121.

At 902, a prediction is performed based on data associated with a distributed table. A processor of a host computer system may determine that its associated machine learning model needs to be updated to perform a more accurate prediction.

At 904, a new weight associated with a machine learning model layer is determined. A machine learning model may be comprised of a plurality of layers. Each layer may have a corresponding weight. A processor of a host computer system may determine an updated weight for a layer.

At 906, the determine weight is provided to other nodes of a distributed computing system. The other nodes of the distributed computing system may have performed corresponding predictions and determined corresponding adjustments to their corresponding machine learning models. At 908, determined weights from other nodes of the distributed computing system are received.

At 910, a collective weight is determined for the machine learning model layer. The collective weight is based on the weight determined by the host computer system and the weights determined by the other nodes of the distributed computing system.

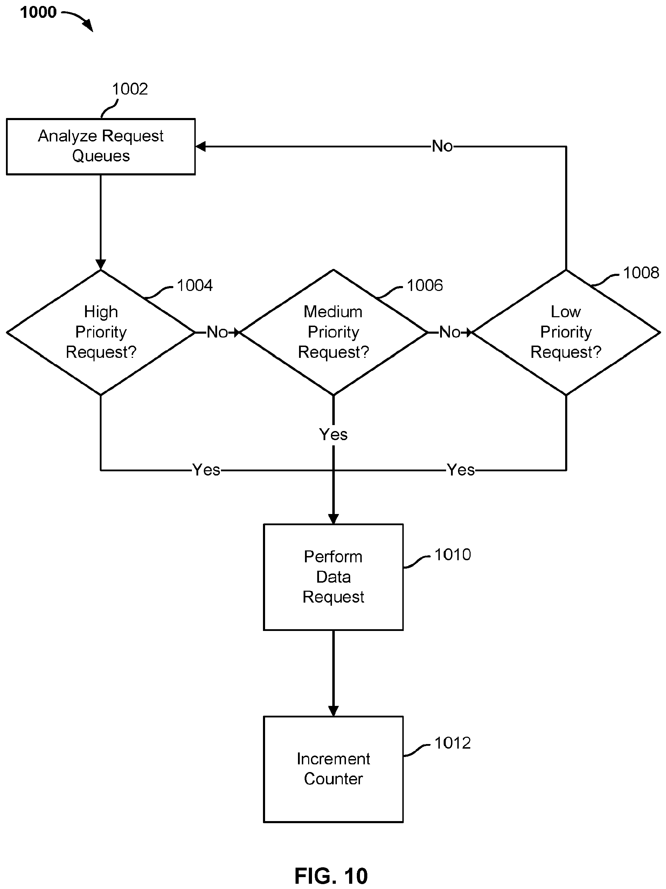

FIG. 10 is a flow chart illustrating a process for selecting a request. In the example shown, process 1000 may be implemented by a memory controller, such as memory controller 105, 115, 125. Process 1000 may be implemented each time a memory controller determines which request to fulfill. In some examples, process 1000 is used to perform some or all of step 610 of process 600.

At 1002, request queues are analyzed. A memory controller may be associated with a plurality of request queues. Each request queue may include zero or more requests. Each request queue has an associated priority level. The request queues may include a priority queue with a high priority level, a priority queue with a medium priority level, and a priority queue with a low priority level. There may be n request queues. A memory controller selects a data request to fulfill based on a priority level associated with a priority queue.

At 1004, it is determined where there are any data requests in a priority queue with a high priority level. A data request included in the priority queue with a high priority level may be immediately fulfilled when the memory controller is able to reserve bandwidth for the request. A data request in a priority queue with a high priority level may be given priority over requests in other queues. A threshold number of requests for a data request in a priority queue with a medium or low priority level may have been fulfilled. It may be the turn of a data request in a priority queue with a medium or low priority level to be fulfilled by the memory controller. However, the memory controller may select to reserve memory bandwidth for the request in the priority queue with a high priority level over the request in a priority queue with a medium or low priority level.

In the event there is a data request in the priority queue with high priority level, process 1000 proceeds to 1010. In the event there are no data requests in the priority queue with high priority level, process 1000 proceeds to 1006.

At 1006, it is determined where there are any data requests in a priority queue with a medium priority level. A data request included in the priority queue with a medium priority level may be fulfilled after a first threshold number of requests have been fulfilled by the memory controller. For example, for a data request in a priority queue with a medium priority level, a memory controller may reserve memory bandwidth after every four requests have been fulfilled. A data request in a priority queue with a medium priority level may be given priority over requests in a priority queue with a low priority level. A threshold number of requests for a request in a priority queue with a low priority level may have been fulfilled. It may be the turn of a data request in a priority queue with low priority level to be fulfilled by the memory controller. However, the memory controller may select to reserve memory bandwidth for the request in the priority queue with a medium priority level over the data request in a priority queue with a low priority level. In the event there is a data request in the medium priority queue, process 1000 proceeds to 1010. In the event there are no data requests in the medium priority queue, process 1000 proceeds to 1008.

At 1008, it is determined where there are any data requests in a low priority queue. A data request included in the priority queue with a low priority level may be fulfilled after a second threshold number of requests have been fulfilled by the memory controller. In the event there is a data request in the low priority queue, process 1000 proceeds to 1010. In the event there are no data requests in the low priority queue, process 1000 returns to 1002.

At 1010, the data request is performed. A memory controller may reserve the amount of memory bandwidth needed to perform the data request and the data request is performed.

At 1012, a counter is incremented. The counter is incremented each time a data request for memory bandwidth is fulfilled. The counter is used to determine whether or not to fulfill a data request from either a priority queue with a high priority level, the priority queue with a medium priority level, or a priority queue with a low priority level.

Although the foregoing embodiments and examples have been described in some detail for purposes of clarity of understanding, the invention is not limited to the details provided. There are many alternative ways of implementing the invention. The disclosed embodiments and examples are illustrative and not restrictive.

## Claims

1. A system, comprising:
a processor configured to:
analyze a machine learning workload and assign corresponding priority levels to identified data requests in the machine learning workload based on an associated data dependency delay performance impact; and
indicate the assigned corresponding priority levels when providing the data requests to a memory controller;
wherein the memory controller is configured to:
sort the received data requests into a plurality of different priority queues based on the indicated corresponding priority levels; and
initiate the data requests from the different priority queues to memory in an order based on different qualities of service of the different priority queues.

2. The system of claim 1, wherein to analyze the machine learning workload, the processor is configured to generate a data dependency graph;
preferably wherein the data dependency graph is comprised of a plurality of nodes, wherein each node of the plurality of nodes corresponds to a data request;
further preferably wherein the processor is configured to determine the associated data dependency delay performance impact for each node of the plurality of nodes.

3. The system of claim 1 or claim 2, wherein the assigned corresponding priority levels include at least a high priority level, a medium priority level, and a low priority level.

4. The system of claim 3, wherein the memory controller is configured to initiate a data request in a priority queue with the high priority level when memory bandwidth associated with the memory is available.

5. The system of claim 3 or claim 4, wherein the memory controller is configured to initiate a data request in a priority queue with the medium priority level when memory bandwidth associated with the memory is available and after a first threshold number of data requests have been fulfilled.

6. The system of any of claims 3 to 5, wherein the memory controller is configured to initiate a data request in a priority queue with the low priority level when memory bandwidth associated with the memory is available and after a second threshold number of data requests have been fulfilled.

7. The system of any preceding claim, wherein to analyze the machine learning workload, the processor is configured to determine a current portion of the machine learning workload.

8. The system of claim 7, wherein the processor is configured to indicate the assigned corresponding priority levels based on the determined current portion of the machine learning workload.

9. The system of claim 8, wherein the determined current portion corresponds to a compute heavy portion of the machine learning workload;
preferably wherein during the compute heavy portion, the processor is configured to assign a data request corresponding to a compute operation to a different priority queue then a data request corresponding to a communication operation.

10. The system of claim 8, wherein the determined current portion corresponds to a communication heavy portion of the machine learning workload;
preferably wherein during the communication heavy portion, the processor is configured to assign a data request corresponding to a compute operation to a different priority queue then a data request corresponding to a communication operation.

11. A method, comprising:
analyzing a machine learning workload and assigning corresponding priority levels to identified data requests in the machine learning workload based on an associated data dependency delay performance impact;
indicating the assigned corresponding priority levels when providing the data requests to a memory controller;
sorting the received data requests into a plurality of different priority queues based on the indicated corresponding priority levels; and
initiating the data requests from the different priority queues to memory in an order based on different qualities of service of the different priority queues.

12. The method of claim 11, wherein analyzing the machine learning workload comprises generating a data dependency graph.

13. The method of claim 12, wherein the data dependency graph is comprised of a plurality of nodes, wherein each node of the plurality of nodes corresponds to a data request;
preferably wherein the processor determines the associated data dependency delay performance impact for each node of the plurality of nodes.

14. The method of any of claims 11 to 13, wherein the assigned corresponding priority levels include at least a high priority level, a medium priority level, and a low priority level.

15. A method, comprising:
analyzing, by a processor, a machine learning workload and assigning corresponding priority levels to identified data requests in the machine learning workload based on an associated data dependency delay performance impact; and
indicating the assigned corresponding priority levels when providing the data requests to a memory controller, wherein the memory controller:
sorts the received data requests into a plurality of different priority queues based on the indicated corresponding priority levels; and
initiates the data requests from the different priority queues to memory in an order based on different qualities of service of the different priority queues.
